# EUROPEAN PATENT APPLICATION

(11) **EP 2 892 227 A1**
(43) Date of publication of application: **08.07.2015**
(21) Application number: 13834940.2
(22) Date of filing: 04.09.2013
(51) Int. Cl.: H04N 7/00

(54) **MONITORING INFORMATION ACQUISITION METHOD, MONITORING DEVICE, CLIENT DEVICE, AND MONITORING SYSTEM**

(30) Priority: 04.09.2012 CN 201210323621
(71) Applicant: Huawei Technologies Co., Ltd., Longgang District Shenzhen, Guangdong 518129 (CN)
(72) Inventor: CAI, Yongjin, Shenzhen Guangdong 518129 (CN); YANG, Zhiquan, Shenzhen Guangdong 518129 (CN)
(74) Representative: Thun, Clemens
(86) International application number: PCT/CN2013/082934
(87) International publication number: WO 2014/036943

(57) **Abstract**

Embodiments of the present invention provide a surveillance information acquisition method, a surveillance device, a client device, and a surveillance system. The method includes: acquiring, by a surveillance device, geographic orientation information of a current surveillance orientation from a component that is integrated into the surveillance device and used to sense a geographic orientation; and sending, by the surveillance device, the geographic orientation information, so that a client device acquires the geographic orientation information and determines a surveillance orientation of a current video image according to the geographic orientation information. In the surveillance information acquisition method provided in the embodiments of the present invention, geographic orientation information of a current surveillance scenario is acquired and the geographic orientation information is sent to a client device, and a current geographic orientation of a surveillance video scenario is provided to a user in a timely manner, so as to help the user accurately understand a condition of the surveillance scenario.

## Description

This application claims priority to Chinese Patent Application No. 201210323621.4, filed with the Chinese Patent Office on September 04, 2012 and entitled "SURVEILLANCE INFORMATION ACQUISITION METHOD, SURVEILLANCE DEVICE, CLIENT DEVICE, AND SURVEILLANCE SYSTEM", which is incorporated herein by reference in its entirety.

### TECHNICAL FIELD

Embodiments of the present invention relate to video surveillance technologies, and in particular, to a surveillance information acquisition method, a surveillance device, a client device, and a surveillance system.

### BACKGROUND

Video surveillance technologies have been applied widely in various fields, for example, surveillance in an underground garage, and unattended surveillance in an agricultural demonstration plot.

In a conventional surveillance project, there are a large number of surveillance devices such as cameras, which are deployed in a wide area. Generally, an administrator is hardly familiar with all surveillance scenarios of the cameras, and it is even more difficult to grasp surveillance orientations of the cameras.

However, in the prior art, a user can only determine a specific geographic orientation condition indirectly according to an image scene captured by a camera, identification symbols in the scene, and the like, which requires that surveillance staff should be rather familiar with the surveillance scenario. If surveillance scenarios are similar, for example, scenarios of all underground garages are very similar, the surveillance staff can hardly determine correctly or even cannot determine the surveillance scenarios.

### SUMMARY

Embodiments of the present invention provide a surveillance information acquisition method, a surveillance device, and a client device, so as to display geographic orientation information of a surveillance scenario on the client device in a timely manner.

According to a first aspect, an embodiment of the present invention provides a surveillance information acquisition method, including:
acquiring, by a surveillance device, geographic orientation information of a current surveillance orientation from a component that is integrated into the surveillance device and used to sense a geographic orientation; and
sending, by the surveillance device, the geographic orientation information, so that a client device acquires the geographic orientation information and determines a surveillance orientation of a current video image according to the geographic orientation information.

In a first possible implementation manner, the determining a surveillance orientation of a current video image according to the geographic orientation information includes:
determining spatial orientation information of the current video image according to the geographic orientation information, where the spatial orientation information is three-dimensional geographic orientation information or two-dimensional geographic orientation information.

In a second possible implementation manner, before the sending the geographic orientation information, the method further includes:
embedding the geographic orientation information into the current video image; and
the sending the geographic orientation information includes:
   sending the video image into which the geographic orientation information is embedded.

With reference to the second possible implementation manner of the first aspect, in a third possible implementation manner, the sending the video image into which the geographic orientation information is embedded includes:
sending, to a server, the video image into which the geographic orientation information is embedded, so that the client device acquires, from the server, the video image into which the geographic orientation information is embedded; or
sending, to the client device, the video image into which the geographic orientation information is embedded; or
sending, to a server, the video image into which the geographic orientation information is embedded, so that the server sends, to the client device, the video image into which the geographic orientation information is embedded.

In a fourth possible implementation manner, the sending the geographic orientation information further includes:
sending the geographic orientation information to a server, so that the server sends the geographic orientation information to the client device.

With reference to the first possible implementation manner, the second possible implementation manner, the third possible implementation manner, and the fourth possible implementation manner, in a sixth possible implementation manner, the acquiring geographic orientation information of a current surveillance orientation includes:
acquiring the geographic orientation information sensed by an electronic compass.

According to a second aspect, an embodiment of the present invention provides a surveillance information acquisition method, including:
receiving geographic orientation information of a current surveillance orientation, where the geographic orientation information is sent by a surveillance device; and
determining a surveillance orientation of a current video image according to the geographic orientation information.

In a first possible implementation manner, the determining a surveillance orientation of a current video image according to the geographic orientation information further includes:
determining spatial orientation information of the current video image according to the geographic orientation information, where the spatial orientation information is three-dimensional geographic orientation information or two-dimensional geographic orientation information.

In a second possible implementation manner, after the determining a surveillance orientation of a current video image according to the geographic orientation information, the method further includes:
displaying the surveillance orientation on an electronic map.

According to a third aspect, an embodiment of the present invention provides a surveillance device, including:
an acquiring module, configured to acquire geographic orientation information of a current surveillance orientation from a component that is integrated into the surveillance device and used to sense a geographic orientation; and
a sending module, configured to send the geographic orientation information, so that a client device acquires the geographic orientation information and determines a surveillance orientation of a current video image according to the geographic orientation information.

In a first possible implementation manner, the sending module further includes:
a determining unit, configured to determine spatial orientation information of the current video image according to the geographic orientation information, where the spatial orientation information is three-dimensional geographic orientation information or two-dimensional geographic orientation information.

In a second possible implementation manner, the surveillance device further includes:
a processing module, configured to embed the geographic orientation information into the current video image; and
the sending module is configured to send the video image into which the geographic orientation information is embedded.

With reference to the second possible implementation manner of the third aspect, in a third possible implementation manner, the sending module further includes:
a first sending unit, configured to send, to a server, the video image into which the geographic orientation information is embedded, so that the client device acquires, from the server, the video image into which the geographic orientation information is embedded; or
a second sending unit, configured to send, to the client device, the video image into which the geographic orientation information is embedded; or
a third sending unit, configured to send, to a server, the video image into which the geographic orientation information is embedded, so that the server sends, to the client device, the video image into which the geographic orientation information is embedded.

In a fourth possible implementation manner, the sending module further includes:
a fourth sending unit, configured to send the geographic orientation information to a server, so that the server sends the geographic orientation information to the client device.

With reference to the first possible implementation manner, the second possible implementation manner, the third possible implementation manner, and the fourth possible implementation manner of the third aspect, in a fifth possible implementation manner, the acquiring module is specifically an electronic compass.

According to a fourth aspect, an embodiment of the present invention provides a client device, including:
a receiving module, configured to receive geographic orientation information of a current surveillance orientation, where the geographic orientation information is sent by a surveillance device; and
a determining module, configured to determine a surveillance orientation of a current video image according to the geographic orientation information.

In a first possible implementation manner, the determining module is further configured to determine spatial orientation information of the current video image according to the geographic orientation information, where the spatial orientation information is three-dimensional geographic orientation information or two-dimensional geographic orientation information.

In a second possible implementation manner, the surveillance device further includes:
a displaying module, configured to display the surveillance orientation on an electronic map.

According to a fifth aspect, an embodiment of the present invention provides a surveillance system, including any one surveillance device provided in the third aspect.

According to the surveillance information acquisition method, the surveillance device, the client device, and the surveillance system provided in the embodiments of the present invention, geographic orientation information currently monitored by a surveillance device is acquired and sent to a client device, so that the client device can determine a current surveillance orientation of the surveillance device according to the geographic orientation information, and can further accurately determine a photographing orientation of a video image currently acquired by the surveillance device by means of surveillance. In the embodiments of the present invention, regardless of a surveillance scenario of the surveillance device, no matter how the surveillance device rotates, the geographic orientation information currently monitored by the surveillance device can be determined accurately and sent to the client device, so that any surveillance person who uses the client device can accurately grasp a condition of the surveillance scenario in a case in which the surveillance person is unfamiliar with the surveillance scenario or surveillance scenarios are similar.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a surveillance information acquisition method according to Embodiment 1 of the present invention;
FIG. 2 is a signaling flowchart of a surveillance information acquisition method according to Embodiment 2 of the present invention;
FIG. 3 is a schematic diagram of three-dimensional angle values of a geographic orientation of a camera;
FIG. 4 is a signaling flowchart of a surveillance information acquisition method according to Embodiment 3 of the present invention;
FIG. 5 is a flowchart of a surveillance information acquisition method according to Embodiment 4 of the present invention;
FIG. 6 is a schematic structural diagram of a surveillance device according to Embodiment 1 of the present invention;
FIG. 7 is a schematic structural diagram of a surveillance device according to Embodiment 2 of the present invention;
FIG. 8 is a schematic structural diagram of a surveillance device according to Embodiment 3 of the present invention;
FIG. 9 is a schematic structural diagram of a surveillance device according to Embodiment 4 of the present invention;
FIG. 10 is a schematic structural diagram of a client device according to Embodiment 1 of the present invention; and
FIG. 11 is a schematic structural diagram of a client device according to Embodiment 2 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

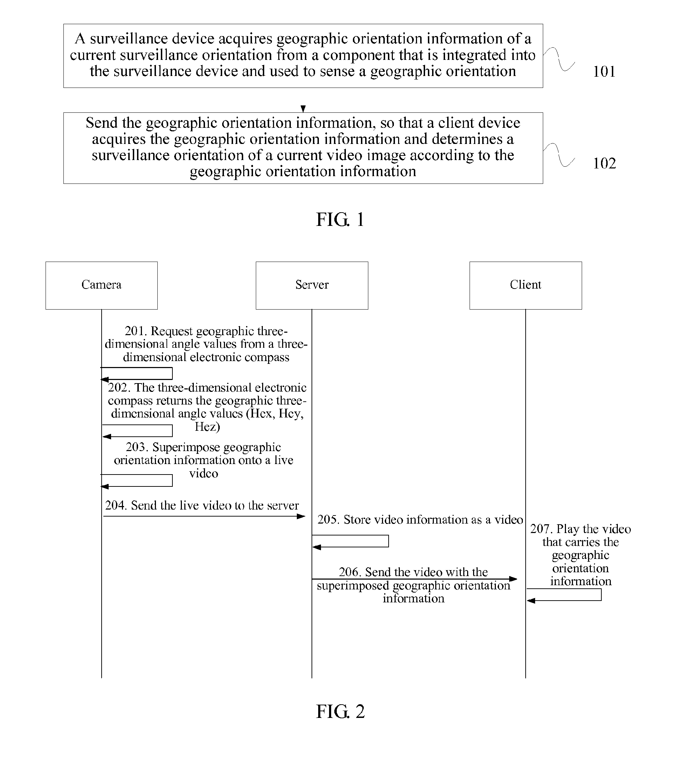

FIG. 1 is a flowchart of a surveillance information acquisition method according to Embodiment 1 of the present invention. As shown in FIG. 1, the method in this embodiment may include:
Step 101: A surveillance device acquires geographic orientation information of a current surveillance orientation from a component that is integrated into the surveillance device and used to sense a geographic orientation.
Step 102: The surveillance device sends the geographic orientation information, so that a client device acquires the geographic orientation information and determines a surveillance orientation of a current video image according to the geographic orientation information.

Generally, because there are a large number of surveillance devices, which are deployed in a wide area, when an administrator is unfamiliar with a surveillance scenario or surveillance scenarios are similar, the administrator can hardly grasp an orientation monitored by the surveillance device. Therefore, if a component capable of determining a geographic orientation by determining magnetic field induction of the earth, such as a three-dimensional electronic compass, an electronic south-pointing compass, or a two-dimensional electronic compass, is integrated into the surveillance device, the component that determines the geographic orientation senses geographic orientation information of a surveillance scenario of a camera, embeds the geographic orientation information into a live video captured by a surveillance device by means of surveillance, where the surveillance device is a box camera, an integrated camera full-sphere PTZ, a dome camera, or the like, and the geographic orientation information is displayed in a friendly manner, and then the live video into which the geographic orientation information is embedded is sent to the client device, and therefore, on a specific map or on a surveillance image, the client device plays the live video into which the geographic orientation information is embedded. Alternatively, the surveillance device may send the geographic orientation information to the client device directly or send the geographic orientation information to the client device by using a server, so that the client device can display the geographic orientation information as required, store the geographic orientation information locally, embed the geographic orientation information into a current video image according to system configuration for playback, forward the geographic orientation information to a third-party component, and the like.

The surveillance device acquires specific geographic orientation information of a current surveillance scenario. Because the acquired geographic orientation information is unique as against the geographic north pole, the specific orientation of the current video image may be determined.

In the surveillance information acquisition method provided in this embodiment of the present invention, geographic orientation information currently monitored by a surveillance device is acquired and sent to a client device, so that the client device determines a current surveillance orientation of the surveillance device according to the geographic orientation information, and further accurately determines a photographing orientation of a video image currently acquired by the surveillance device by means of surveillance. In this embodiment, there is no need to preset a name of the surveillance device or a name of a preset location; regardless of a surveillance scenario of the surveillance device, no matter how the surveillance device rotates, the current geographic orientation information of the surveillance device can be determined, sent to the client device, and intuitively presented to a customer, so that any surveillance person who uses the client device can observe a condition of the surveillance scenario in real time and guide movement of a person or vehicle in the scenario in a case in which the surveillance person is unfamiliar with the surveillance scenario or surveillance scenarios are similar.

In a surveillance information acquisition method according to Embodiment 2 of the present invention, before sending geographic orientation information to the client device, the surveillance device may first embed the geographic orientation information into a currently monitored video image, and then the surveillance device may send, to the client device, the video image into which the geographic orientation information is embedded.

The surveillance device determines spatial orientation information of the current video image according to the geographic orientation information, where the spatial orientation information is three-dimensional geographic orientation information or two-dimensional geographic orientation information. In this embodiment of the present invention, the surveillance device converts the acquired geographic orientation information into the spatial orientation information of the current video image, for example, converts the acquired three-dimensional geographic orientation information of an angle relative to each coordinate axis into a geographic orientation angle that is relative to the north pole and easy to identify.

A component capable of determining a geographic orientation by determining magnetic field induction of the earth, or the like, is integrated into the surveillance device to sense specific geographic orientation information, and the geographic orientation information is embedded into a currently monitored live video image in real time. For example, after acquiring the geographic orientation information, the surveillance device generates an orientation identification chart out of the geographic orientation information, superimposes the orientation identification chart onto the current video image, and sends the video image with the superimposed geographic orientation information to the client device. In addition, the surveillance device may also superimpose and embed the geographic orientation information into the current video image according to system configuration requirements or according to a request of the server or the client.

During a network transmission implementation process, the surveillance device may send, to the server first, the video image into which the geographic orientation information is embedded, so that the server can send, to the client device, the video image into which the geographic orientation information is embedded.

In specific implementation, the server may send, to the client device, the video image into which the geographic orientation information is embedded in either of the following two manners: The server proactively sends, to the client device, the video image into which the geographic orientation information is embedded; or, the client device sends a request to the server, and, after receiving the request, the server sends, to the client device, the video image into which the geographic orientation information is embedded.

The following describes the technical solution of the second method embodiment in detail with reference to the following specific application procedure: A camera sends, to the server for storage, a video image into which the geographic orientation information is embedded, or the server forwards the video image to the client device for playback. For details, refer to FIG. 2. In this embodiment, an electronic compass is used as a device for collecting the geographic orientation information, where the electronic compass may be integrated into the surveillance device. A specific integration manner may be designed and implemented by persons skilled in the art, and is not described again in this embodiment.

FIG. 2 is a signaling flowchart of a surveillance information acquisition method according to Embodiment 2 of the present invention. As shown in FIG. 2, in this embodiment, a camera embeds acquired geographic orientation information into a video image and sends the video image to a client device. The method in this embodiment includes:
Step 201: The camera requests geographic three-dimensional angle values from a three-dimensional electronic compass.

In this embodiment, the camera proactively acquires three-dimensional angles of the geographic orientation information from the three-dimensional electronic compass. However, the present invention is not limited thereto. In other possible implementation manners, the three-dimensional electronic compass may proactively report real-time three-dimensional angles of a geographic orientation to the camera, or, according to a request of a server or the client device, report real-time three-dimensional angles of a geographic orientation to the camera. In addition, the camera may also proactively acquire the three-dimensional angles of the geographic orientation information from the electronic three-dimensional compass according to the request of the server or the client device. For example, the client may send a request instruction every 5 minutes to trigger the camera to proactively acquire three-dimensional angle information.

Understandably, the three-dimensional electronic compass in this embodiment may be replaced with an electronic south-pointing compass, a two-dimensional electronic compass, or another component capable of determining the geographic orientation by determining magnetic field induction of the earth.

Step 202: The three-dimensional electronic compass returns the geographic three-dimensional angle values (Hex, Hey, Hez) to the camera.

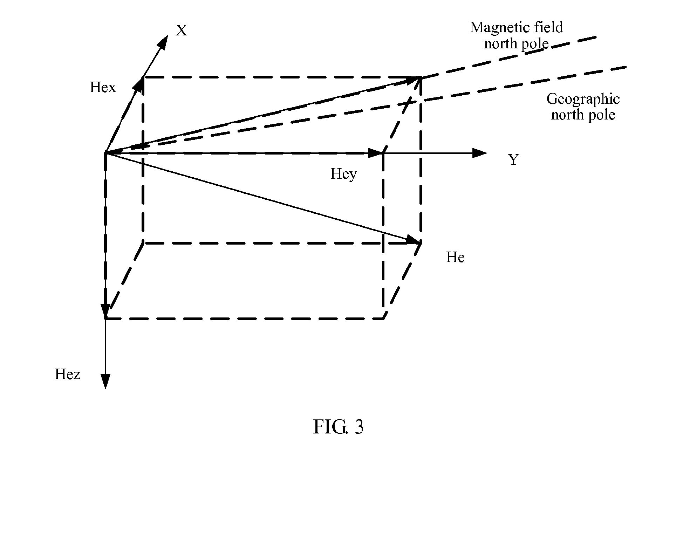

The camera acquires the geographic orientation information sensed by the three-dimensional electronic compass, that is, the three-dimensional angles of the geographic orientation. For details, refer to FIG. 3. FIG. 3 is a schematic diagram of three-dimensional angle values of a geographic orientation of a camera. As shown in FIG. 3, the three-dimensional angle values of the geographic orientation refer to coordinate values acquired by projecting the geographic orientation information He onto an X axis, a Y axis, and a Z axis respectively by using the core of the earth as a coordinate origin, where the geographic orientation information is acquired by the electronic compass, that is, the three-dimensional angle values are Hex, Hey, and Hez. Step 203: The camera superimposes the geographic orientation information onto a live video.

The camera converts the three-dimensional angle values of the geographic orientation into geographic orientation information (a northbound orientation) and encodes the geographic orientation information together with a current video image, so as to superimpose the geographic orientation information onto the current video image. In addition, in other embodiments, the superimposition may also be performed as required according to system configuration. For example, the system requires that the client device should be notified of new geographic orientation information each time a photographing orientation changes. That is, before a location changes, geographic orientation information existing before the change of the location is superimposed onto the live video, and, once the acquired geographic orientation information changes, the acquired new geographic orientation information is superimposed onto the live video. Therefore, when an orientation of the camera is changed due to an external factor or adjusted by a user by using a command, the photographing orientation changes. In this case, the camera acquires geographic orientation information existing after the adjustment of the location, and superimposes the geographic orientation information onto the current live video, so that the geographic orientation information superimposed onto the video image is always the geographic orientation information of the video image currently captured by the camera. In addition, the camera may also superimpose the geographic orientation information onto the live video according to triggering from the outside, for example, after receiving a request from the server or a request from the client.

Step 204: The camera sends the live video to the server.

The camera sends the video image with the superimposed geographic orientation information to the server.

Step 205: The server stores video information as a video.

Step 206: The server sends the video with the superimposed geographic orientation information to the client device.

The server may store the received video image with the superimposed geographic orientation information as a video, so that the video can be accessed by the client device and the like, or the received video image with the superimposed geographic orientation information may be sent to the client device.

Step 207: The client device plays a video that carries the geographic orientation information.

The client device plays, in its interface, the live video to the user, where the played live video displays the geographic orientation information (a northbound orientation) of a current surveillance scenario.

In this embodiment, the present invention is expounded by assuming that the acquired three-dimensional angle values of the geographic orientation serve as the geographic orientation information. However, the present invention is not limited thereto. In other implementation manners, an angle against each coordinate axis in a three-dimensional orientation may also be acquired and then converted into geographic orientation information. In addition, two-dimensional angle values may also be acquired. For example, the two-dimensional angle values are acquired regardless of a height of the surveillance device.

The surveillance information acquisition method according to Embodiment 3 of the present invention differs from that according to Embodiment 2 in that: The specific geographic orientation information sensed by the component that is integrated into the surveillance device and used to determine the geographic orientation may be directly sent by the surveillance device to the client device, the server, a decoder, a third-party component, or another requesting component without being superimposed onto the current video image, and the corresponding requesting component performs superimposition for the geographic orientation information and the live video, and then the video is stored or intuitively presented to a customer.

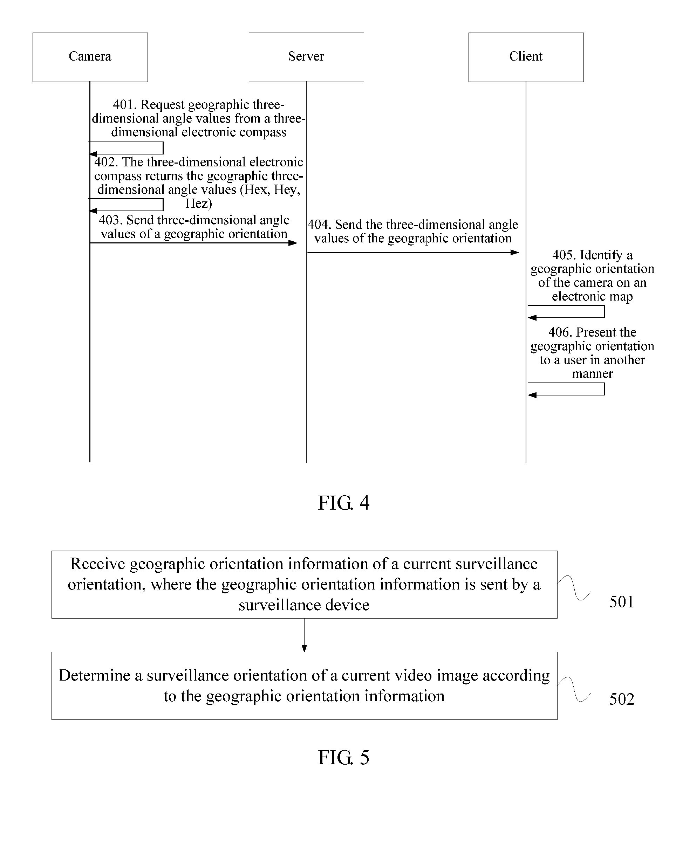

FIG. 4 is a signaling flowchart of a surveillance information acquisition method according to Embodiment 3 of the present invention. As shown in FIG. 4, in this embodiment, a camera directly sends acquired geographic orientation information to a server, and the server sends the geographic orientation information to a client device.

The method in this embodiment may include:
Step 401: The camera requests geographic three-dimensional angle values from a three-dimensional electronic compass.
Step 402: The three-dimensional electronic compass returns the geographic three-dimensional angle values (Hex, Hey, Hez) to the camera.

For details, refer to step 201 and step 202 in the signaling flowchart of the surveillance information acquisition method according to Embodiment 2 shown in FIG. 2, and details are not described herein again.

Step 403: The camera sends three-dimensional angle values of a geographic orientation to the server.

Step 404: The server sends the three-dimensional angle values of the geographic orientation.

In this step, the camera directly sends the acquired three-dimensional angle values of the geographic orientation to the server, and the server forwards the three-dimensional angle values to the client device.

Step 405: The client device identifies geographic orientation information of the camera on an electronic map.

Step 406: The client device presents the geographic orientation information to a user in another manner.

The client device identifies the three-dimensional angle values of the geographic orientation on a client-side electronic map or converts the three-dimensional angle values into a more intuitive form and presents the values to the user on the client-side electronic map.

In this embodiment, the present invention is expounded by assuming that the acquired three-dimensional angle values of the geographic orientation serve as the geographic orientation information. However, the present invention is not limited thereto. In other implementation manners, an angle against each coordinate axis in a three-dimensional orientation may also be acquired and then converted into geographic orientation angle values. In addition, two-dimensional angle values may also be acquired. For example, the two-dimensional angle values are acquired regardless of a height of the surveillance device.

For a box camera, the three-dimensional electronic compass is generally integrated on a main control board of the camera. For a PTZ camera, a lens of the PTZ camera is directly connected to an integrated core, and therefore, the three-dimensional electronic compass is generally integrated on the integrated core of the camera or is bound to the integrated core. For a dome camera, because angle adjustment is generally not performed after the dome camera is installed, the three-dimensional electronic compass may not be integrated into the dome camera. If needed, the three-dimensional electronic compass is generally integrated on a sensing board of the camera. To reduce subsequent computing, a default north pole pointing direction of the three-dimensional electronic compass is parallel to a lens direction of the camera. The component that determines the geographic orientation may also be integrated into another component whose lens rotation angle is spatially isomorphic. After acquiring a result, the surveillance device converts, according to isomorphic principles, the result into geographic orientation information corresponding to a surveillance scenario of the lens.

In this embodiment of the present invention, the component that is integrated into the surveillance device and used to determine the geographic orientation may be adjusted as required, and any integration manner that ensures acquisition of the geographic orientation information is applicable to the present invention.

FIG. 5 is a flowchart of a surveillance information acquisition method according to Embodiment 4 of the present invention. As shown in FIG. 5, the method in this embodiment may include:
Step 501: Receive geographic orientation information of a current surveillance orientation, where the geographic orientation information is sent by a surveillance device.

A client device receives the geographic orientation information of the current surveillance orientation, where the geographic orientation information is sent by the surveillance device.

Step 502: Determine a surveillance orientation of a current video image according to the geographic orientation information.

The client device converts the received geographic orientation information into a more intuitive form, and presents the geographic orientation information on a client-side interface for a user.

Specifically, the client device determines spatial orientation information of the current video image according to the geographic orientation information, where the spatial orientation information is three-dimensional geographic orientation information or two-dimensional geographic orientation information. In this embodiment of the present invention, the client device converts the acquired geographic orientation information into the spatial orientation information of the current video image, for example, converts the acquired three-dimensional geographic orientation information of an angle relative to each coordinate axis into a geographic orientation angle that is relative to the north pole and easy to identify.

In the surveillance information acquisition method according to Embodiment 5 of the present invention, after the determining a surveillance orientation of a current video image according to the geographic orientation information, the method further includes: displaying the surveillance orientation on an electronic map.

Specifically, after receiving the geographic orientation information, the client device displays it on a client-side electronic map. For example, the client device may convert the received geographic orientation information into information such as north, east, 30° westbound from north, vertically downward, or vertically upward, and displays the information on the customer's electronic map for the customer.

In a surveillance information acquisition method provided in this embodiment, a client device receives geographic orientation information sent by a third-party component such as a surveillance device or a server, and embeds the geographic orientation information into a current video in real time for playback, or converts the geographic orientation information into a more intuitive form and displays it on a client-side electronic map, or presents the geographic orientation information to a customer in another manner according to system configuration, so that any surveillance person who uses the client device can accurately understand a condition of a surveillance scenario in a case in which the surveillance person is unfamiliar with the surveillance scenario or surveillance scenarios are similar.

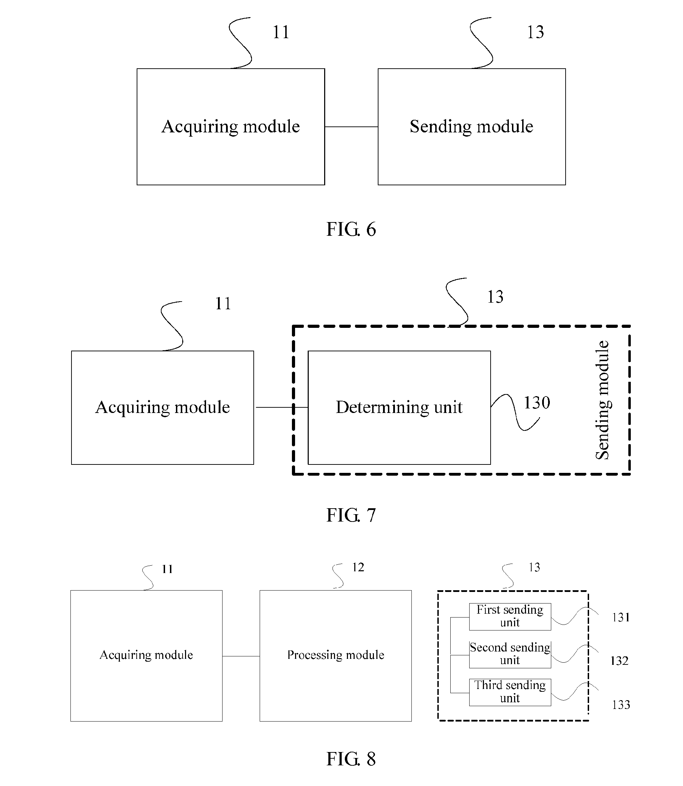

FIG. 6 is a schematic structural diagram of a surveillance device according to Embodiment 1 of the present invention. As shown in FIG. 6, the surveillance device in this embodiment may include an acquiring module 11 and a sending module 13.

The acquiring module 11 is configured to acquire geographic orientation information of a current surveillance orientation from a component that is integrated into the surveillance device and used to sense a geographic orientation.

The sending module 13 is configured to send the geographic orientation information, so that a client device acquires the geographic orientation information and determines a surveillance orientation of a current video image according to the geographic orientation information.

The apparatus in this embodiment may be used to implement the technical solution in the first method embodiment shown in FIG. 1, and implementation principles and technical effects of the apparatus are similar and are not described herein again.

FIG. 7 is a schematic structural diagram of a surveillance device according to Embodiment 2 of the present invention. As shown in FIG. 7, on the basis of the apparatus in the embodiment shown in FIG. 6, the sending module of the surveillance device in this embodiment may further include:
a determining unit 130, configured to determine spatial orientation information of the current video image according to the geographic orientation information, where the spatial orientation information is three-dimensional geographic orientation information or two-dimensional geographic orientation information.

FIG. 8 is a schematic structural diagram of a surveillance device according to Embodiment 3 of the present invention. As shown in FIG. 8, on the basis of the apparatus in the embodiment shown in FIG. 6, the sending module of the surveillance device in this embodiment further includes:
a processing module 12, configured to embed the geographic orientation information into the currently monitored video image.

The sending module 13 further includes:
a first sending unit 131, configured to send, to a server, the video image into which the geographic orientation information is embedded, so that the client device acquires, from the server, the video image into which the geographic orientation information is embedded; or
a second sending unit 132, configured to send, to the client device, the video image into which the geographic orientation information is embedded; or
a third sending unit 133, configured to send, to a server, the video image into which the geographic orientation information is embedded, so that the server sends, to the client device, the video image into which the geographic orientation information is embedded.

The apparatus in this embodiment may be used to implement the technical solution in the second method embodiment, and implementation principles and technical effects of the apparatus are similar and are not described herein again.

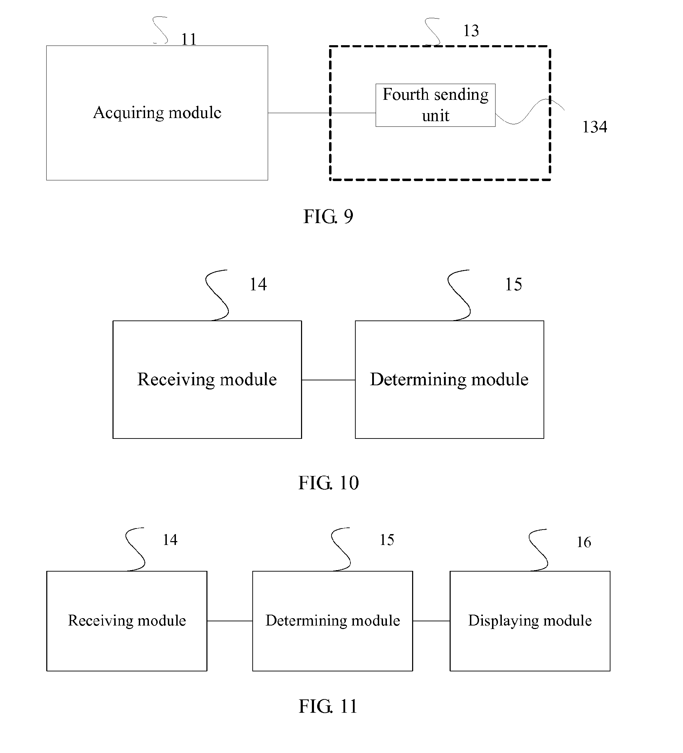

FIG. 9 is a schematic structural diagram of a surveillance device according to Embodiment 4 of the present invention. As shown in FIG. 9, on the basis of the apparatus in the embodiment shown in FIG. 6, the sending module 13 of the surveillance device in this embodiment further includes:
a fourth sending unit 134, configured to send the geographic orientation information to a server, so that the server sends the geographic orientation information to the client device.

The apparatus in this embodiment may be used to implement the technical solution in the third method embodiment, and implementation principles and technical effects of the apparatus are similar and are not described herein again.

In the foregoing embodiment of the present invention, the acquiring module 13 is specifically an electronic compass.

A component for sensing a geographic orientation, such as a three-dimensional electronic compass, an electronic south-pointing compass, a two-dimensional electronic compass, or another component capable of determining the geographic orientation by determining magnetic field induction of the earth, is integrated into the camera, and the geographic orientation information is acquired by using the component that determines the geographic orientation.

FIG. 10 is a schematic structural diagram of a client device according to Embodiment 1 of the present invention. As shown in FIG. 10, a surveillance device in this embodiment may include a receiving module 14 and a determining module 15.

The receiving module 14 is configured to receive geographic orientation information of a current surveillance orientation, where the geographic orientation information is sent by the surveillance device.

The determining module 15 is configured to determine a surveillance orientation of a current video image according to the geographic orientation information; and further, the determining module 15 is further configured to determine spatial orientation information of the current video image according to the geographic orientation information, where the spatial orientation information is three-dimensional geographic orientation information or two-dimensional geographic orientation information.

The apparatus in this embodiment may be used to implement the technical solution in the fourth method embodiment, and implementation principles and technical effects of the apparatus are similar and are not described herein again.

FIG. 11 is a schematic structural diagram of a client device according to Embodiment 2 of the present invention. As shown in FIG. 11, on the basis of the apparatus shown in FIG. 10, a surveillance device in this embodiment may further include a displaying module 16.

The displaying module 16 is configured to display the surveillance orientation on an electronic map.

The apparatus in this embodiment may be used to implement the technical solution in the fifth method embodiment, and implementation principles and technical effects of the apparatus are similar and are not described herein again.

An embodiment of the present invention further provides a surveillance system, which includes any one surveillance device described above. For details, refer to the foregoing description about the surveillance device, and details are not described herein again.

According to the surveillance information acquisition method, the surveillance device, the client device, and the surveillance system provided in the embodiments of the present invention, geographic orientation information currently monitored by a surveillance device is acquired and sent to a client device, so that the client device determines a current surveillance orientation of the surveillance device according to the geographic orientation information. In this embodiment, regardless of a surveillance scenario of the surveillance device, no matter how the surveillance device rotates, current surveillance orientation information of the surveillance device can be determined and intuitively presented to a customer, so that any surveillance person can observe a condition of the surveillance scenario in real time and guide movement of a person, a vehicle, or the like in the scenario in a case in which the surveillance person is unfamiliar with the surveillance scenario or surveillance scenarios are similar.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A surveillance information acquisition method, comprising:
acquiring, by a surveillance device, geographic orientation information of a current surveillance orientation from a component that is integrated into the surveillance device and used to sense a geographic orientation; and
sending, by the surveillance device, the geographic orientation information, so that a client device acquires the geographic orientation information and determines a surveillance orientation of a current video image according to the geographic orientation information.

2. The method according to claim 1, wherein the determining a surveillance orientation of a current video image according to the geographic orientation information comprises:
determining spatial orientation information of the current video image according to the geographic orientation information, wherein the spatial orientation information is three-dimensional geographic orientation information or two-dimensional geographic orientation information.

3. The method according to claim 1, wherein, before the sending the geographic orientation information, the method further comprises:
embedding the geographic orientation information into the current video image; and
the sending the geographic orientation information comprises:
sending the video image into which the geographic orientation information is embedded.

4. The method according to claim 3, wherein:
the sending the video image into which the geographic orientation information is embedded comprises:
sending, to a server, the video image into which the geographic orientation information is embedded, so that the client device acquires, from the server, the video image into which the geographic orientation information is embedded; or
sending, to the client device, the video image into which the geographic orientation information is embedded; or
sending, to a server, the video image into which the geographic orientation information is embedded, so that the server sends, to the client device, the video image into which the geographic orientation information is embedded.

5. The method according to claim 1, wherein the sending the geographic orientation information further comprises:
sending the geographic orientation information to a server, so that the server sends the geographic orientation information to the client device.

6. The method according to any one of claims 1 to 5, wherein the acquiring geographic orientation information of a current surveillance orientation comprises:
acquiring the geographic orientation information sensed by an electronic compass.

7. A surveillance information acquisition method, comprising:
receiving geographic orientation information of a current surveillance orientation, wherein the geographic orientation information is sent by a surveillance device; and
determining a surveillance orientation of a current video image according to the geographic orientation information.

8. The method according to claim 7, wherein:
the determining a surveillance orientation of a current video image according to the geographic orientation information comprises:
determining spatial orientation information of the current video image according to the geographic orientation information, wherein the spatial orientation information is three-dimensional geographic orientation information or two-dimensional geographic orientation information.

9. The method according to claim 7, wherein, after the determining a surveillance orientation of a current video image according to the geographic orientation information, the method further comprises:
displaying the surveillance orientation on an electronic map.

10. A surveillance device, comprising:
an acquiring module, configured to acquire geographic orientation information of a current surveillance orientation from a component that is integrated into the surveillance device and used to sense a geographic orientation; and
a sending module, configured to send the geographic orientation information, so that a client device acquires the geographic orientation information and determines a surveillance orientation of a current video image according to the geographic orientation information.

11. The device according to claim 10, wherein the sending module further comprises:
a determining unit, configured to determine spatial orientation information of the current video image according to the geographic orientation information, wherein the spatial orientation information is three-dimensional geographic orientation information or two-dimensional geographic orientation information.

12. The device according to claim 10, further comprising:
a processing module, configured to embed the geographic orientation information into the current video image, and
the sending module is configured to send the video image into which the geographic orientation information is embedded.

13. The device according to claim 12, wherein:
the sending module further comprises:
a first sending unit, configured to send, to a server, the video image into which the geographic orientation information is embedded, so that the client device acquires, from the server, the video image into which the geographic orientation information is embedded; or
a second sending unit, configured to send, to the client device, the video image into which the geographic orientation information is embedded; or
a third sending unit, configured to send, to a server, the video image into which the geographic orientation information is embedded, so that the server sends, to the client device, the video image into which the geographic orientation information is embedded.

14. The device according to claim 10, wherein the sending module further comprises:
a fourth sending unit, configured to send the geographic orientation information to a server, so that the server sends the geographic orientation information to the client device.

15. The surveillance device according to any one of claims 10 to 14, wherein the acquiring module is specifically an electronic compass.

16. A client device, comprising:
a receiving module, configured to receive geographic orientation information of a current surveillance orientation, wherein the geographic orientation information is sent by a surveillance device; and
a determining module, configured to determine a surveillance orientation of a current video image according to the geographic orientation information.

17. The device according to claim 16, wherein:
the determining module is further configured to determine spatial orientation information of the current video image according to the geographic orientation information, wherein the spatial orientation information is three-dimensional geographic orientation information or two-dimensional geographic orientation information.

18. The device according to claim 16, further comprising:
a displaying module, configured to display the surveillance orientation on an electronic map.

19. A surveillance system, comprising the surveillance device according to any one of claims 10 to 15.
